# EUROPEAN PATENT SPECIFICATION

(11) **EP 2 135 429 B1**
(45) Date of publication and mention of the grant of the patent: **06.09.2017**
(21) Application number: 08718755.5
(22) Date of filing: 14.03.2008
(51) Int. Cl.: H04L 29/06, H04L 29/08

(54) **DATA TRANSMISSION SCHEDULER**
DATENÜBERTRAGUNGS-SCHEDULER
PROGRAMMATEUR DE TRANSMISSION DE DONNÉES

(30) Priority: 16.03.2007 EP 07251129
(43) Date of publication of application: 23.12.2009
(73) Proprietor: BRITISH TELECOMMUNICATIONS public limited company, London EC1A 7AJ (GB)
(72) Inventor: SCAHILL, Francis, James, Suffolk IP8 4NG (GB)
(74) Representative: Chan, Robin
(86) International application number: PCT/GB2008/000915
(87) International publication number: WO 2008/113986

(56) References cited:
- EP-A- 1 221 784
- WO-A-00/74338
- US-A1- 2003 135 643
- US-A1- 2005 018 624

## Description

The present invention relates to a method of scheduling a data transmission over a wireless network connection in a communications network and related aspects.

Many mobile communications devices have communications capabilities enabling applications to be run using the mobile operating system which exchange data with remote servers over communications links. Examples which are currently well known in the art include mobile telephony devices which run applications such as calendars and meeting planners as well music and video applications, for example, the Apple iPhone™ which not only provides telephony functionality but also provides access to the world-wide-web, as well as allowing direct music and video downloads and replay onto the device. Other examples of mobile communications devices include mobile computers and personal digital assistants (PDAs) which can also require data communications connectivity for some of the applications they support. An application on a mobile communication device may require intermittent synchronisation of cached data with a remote server.

United States Patent Application US2003/0135643 entitled "Data Transmission Scheduling System and Method" describes a data transmission scheduling system and method which utilizes the transmission character of a wireless network to schedule data updating and downloading and to design a customized transmission mechanism. In US2003/0135643, a user defines a scheduling plan and the system triggers a transmission mechanism to complete a data transmission when a certain schedule condition is detected to be valid. The system establishes and executes tasks according to the schedule unless a self-adjusting transmission module is invoked. The self-adjusting process involves, at the scheduled time for performance of the transmission, sending out a channel status detection command to determine if the network is congested and if so, deleting the schedule task from the queue and generating a new scheduled time for execution of the task according to a predetermined delay time and adding the new task to the schedule queue. If the network is not congested at the new scheduled time, then the task is executed.

The system proposed in US2005/00186 requires a user to manually configure the schedule of tasks. This may result in the user configuring the schedule according to their anticipated usage of the device. So, for example, a user may configure all the applications on their device which require intermittent synchronisation with a remote server to perform such synchronisation at midnight. However, if the user specifies two or more applications are to synchronise at midnight, the synchronisation mechanism must determine a priority order for execution each task. Even if a user were to attempt to guess how long each task might take, and schedule task A for midnight and task B for half past midnight, some tasks may have different requirements from day to day and take long one some occasions to perform than on others. Moreover, if at midnight the mobile communications device is in a location which has a very weak or no wireless network coverage the network conditions may be totally inappropriate for up or downloading large amounts of data with a remote server. The result might be that the self-adjusting transmission module of US2005/00186 would repeatedly self-adjust the transmission times until the network condition improved when the user goes to work in the morning and moves out of the area of poor signal quality. As each attempt to establish a transmission uses up the resources of the mobile communications device the result may be a drain on the battery power of the device.

The scheduling system taught by US2005/00186 is thus limited as the first scheduled performance and any rescheduled performances determined by a predetermined time delay may not coincide with appropriate network conditions to support the type of data transmission required to complete the scheduled task. Each attempt at transmission in accordance with such a scheduling system needlessly wastes the resources of the device and if a data transmission is aborted as the network conditions alter in the course of the transmission, network resources have also been wasted. In addition, under certain conditions, e.g., if located in a roaming data network, the user may be on a tariff which would mean that each aborted data transmission still incurred a cost for the user.

Accordingly, it is useful if the task execution can be timed to coincide with appropriate network conditions to prevent having any necessity to perform such a delay operation. This requires a suitable prediction mechanism to determine when appropriate network conditions may occur. However, as mobile devices may change location, the mobile device may be in a location where it has never been before and prediction is not possible using just data collated by the mobile device itself on network conditions at various times. Many devices can support multiple access technologies and for such devices it is not just a case of the signal strength varying in a particular network but that in different locations different types of network e.g. Bluetooth PAN, Wi-Fi, WiMax, 2G, 3G with vastly differing capabilities and costs are available.

Many wireless communications enabled devices, such as computers and telephone-type devices are capable of supporting multiple network connection types. Devices which handover between different types of network (e.g. they perform a heterogeneous network handover) but essentially only maintain one network connection at a time are well known in the art as are devices which can support multiple network connections simultaneously.

Wireless network characteristics vary according to the communications protocol they support and can also vary from time-to-time and/or according to the location of a communications device in that network's environment. For example, download speeds differ for different types of network and services supported by that network: the General Packet Radio Service (GPRS) is a dedicated data service based on a separate packet data network which allows up to 8 GSM channels to be concatenated together giving a possible bit rate of over 70 kbits/s. GPRS typically limits downlink speeds to 20kb/s. The Universal Mobile Telecommunications System (UMTS) (also known as IMT-2000) typically limits downlink speeds to be higher at 64-128 kb/s. Wireless Local Area Network (WLAN) performance varies hugely depending on the particular access point e.g. a home network may provide up to 8 Mb/s however a public WLAN hotspot in a busy city centre may only provide 100kb/s. Connection quality can also be hugely variable based on time of day. Cellular networks often reach capacity and block data sessions at the end of the working day. Public WLAN hotspots are often congested during commuter time. The availability of different network connection types also varies geographically a WLAN hotspot may only have a range of 1-200 meters whereas cellular coverage maybe virtually ubiquitous.

Users are typically unaware of which network connections are available to them at any particular time or of the characteristics of an available network connection such as whether a network is congested or not. A user may not be aware of the optimum network connection characteristics a particular application hosted on a wireless communications device associated with a user might require to perform a particular task. In some cases, it is not practical for some tasks which are resource intensive to be performed when the user is also trying to use the device. Accordingly, even if an application enables a user to schedule when a particular task is performed, the user is likely to simply select a scheduled time providing optimum transmission conditions, as they are likely to select a time when they won't be using the device, such as when the user is at home asleep. If the user lives in an area or building which has poor network connections then the tasks the user has opted to perform may not be successfully completed. There may also be issues with conflicts between different applications if one unsuccessfully attempts to perform a task and then reattempts to perform the task when another task has been scheduled by the user to be performed. Some applications running on a mobile communications device may need to synchronise repeatedly during a 24 hour period with a remote server and where an application requires several data transmissions to be performed within a 24 hour period, manually configuration of when the synchronisation tasks are to be scheduled may not be practical.

Thus where a plurality of applications are supported on the same mobile communications device, it is useful if not just each application is automatically configured to perform tasks when the data transmission conditions are favourable for completion of the task but also if the execution of the plurality of applications is somehow co-ordinated. By co-ordinating a plurality of applications in their execution each task can be performed by one of the plurality of applications under suitable network conditions in a way which reduces or removes the likelihood of any conflict with other applications trying to also establish a connection over the same wireless communications link. Even when a wireless communications device can support more than one network connection it is useful if conflicts can be resolved to ensure applications (and the performance of tasks which require a network connection) are co-ordinated as otherwise conflicts could still occur between applications.

It is known in the art to configure a communications-enabled device to continually scan for available networks and trigger applications when a particular network is available, particularly in the context of applications registering call-backs for various network interfaces. Such known solutions are, however, limited in that the continual scan process is highly draining on resources such as electrical power. This is an adverse effect where electrical power is supplied by a battery-type device. In addition, there may be long periods of time (many hours or even days) between the user being in range of a suitable network, and even when in range, the network characteristics at that time may not be suitable (for example, it may be congested). In addition, even if a user is in range of a suitable network, the user must remain in range sufficiently long enough for the application to complete its utilisation of the network resources. If the user passes through too quickly and the opportunity for use is limited, then an application has used up device resources such as electrical battery power attempting to use a network connection to complete a task which must then be aborted if the connection prematurely fails.

Other limitations are that an application may not need to run every time a particular network is available, but instead may need to run at a regular interval (e.g. daily or weekly) but at a time which coincides with the right network being available. Another limitation is that many devices (e.g. Java2 Micro Edition (J2ME) devices) do not have explicit network awareness capabilities to implement such a call-back mechanism and some devices have only a mechanism to launch an application at a predetermined time and date, i.e., the application cannot "self-start".

In one aspect, an embodiment provides a method as set out in claim 1. In another aspect, an embodiment of the invention provides a device as set out in claim 10. Preferred embodiments are set out in the dependent claims. Preferred embodiments of the invention will now be described with reference to the accompanying drawings which are by way of example only, and in which:
Figure 1A shows a communications system according to one embodiment of the invention;
Figure 1B shows a client application comprising a client library according to one embodiment of the invention;
Figure 2A shows examples of tasks and dependent task relationships for which an application scheduler may schedule action according to a one-to-one task client application mapping embodiment of the invention;
Figure 2B shows how the exemplary tasks of Figure 2A are scheduled for execution in a series of connection windows according to an embodiment of the invention;
Figure 2C shows examples of tasks and dependent task relationships for which an application scheduler may schedule action according to a many to one task client application mapping embodiment of the invention;
Figure 2D shows how the exemplary tasks of Figure 2C are scheduled for execution in a series of connection windows according to an embodiment of the invention;
Figure 3 shows some steps implemented in a method of network aware application scheduling by an embodiment of the invention;
Figure 4 shows schematically a system provided on a communications device for implementing an application scheduler according to an embodiment of the invention;
Figure 5 shows the steps performed by the application scheduler of Figure 4;
Figure 6A shows schematically steps implemented by an application scheduler when initialising according to an embodiment of the invention;
Figure 6B shows schematically steps implemented by an application scheduler when initialising according to another embodiment of the invention;
Figure 7 shows schematically steps implemented by an application scheduler in an embodiment of the invention in which battery level impacts the scheduling decision process performed by the application scheduler;
Figures 8 and 9 show schematically flow charts indicating how an application scheduler is implemented according to an embodiment of the invention;
Figure 10 shows a communications system including an application scheduler which obtains data using active connection quality measurements according to another embodiment of the invention;
Figure 11 shows schematically an implementation of the application scheduler shown in Figure 10; and
Figure 12 shows schematically a message flow to measure connection quality characteristics according to the embodiment of the invention shown in Figure 10.

In the following description, for purposes of explanation, numerous specific details are set forth in order to provide a thorough understanding of the present invention. It will be evident, however, to one of ordinary skill in the art, that the present invention may be practiced without these specific details. In other instances, well-known structures and devices are shown in simplified diagrammatic form to facilitate explanation and additional detail known to one of ordinary skill in the art has been omitted for clarity. The description of preferred embodiments is not intended to limit the scope of the claims appended hereto.

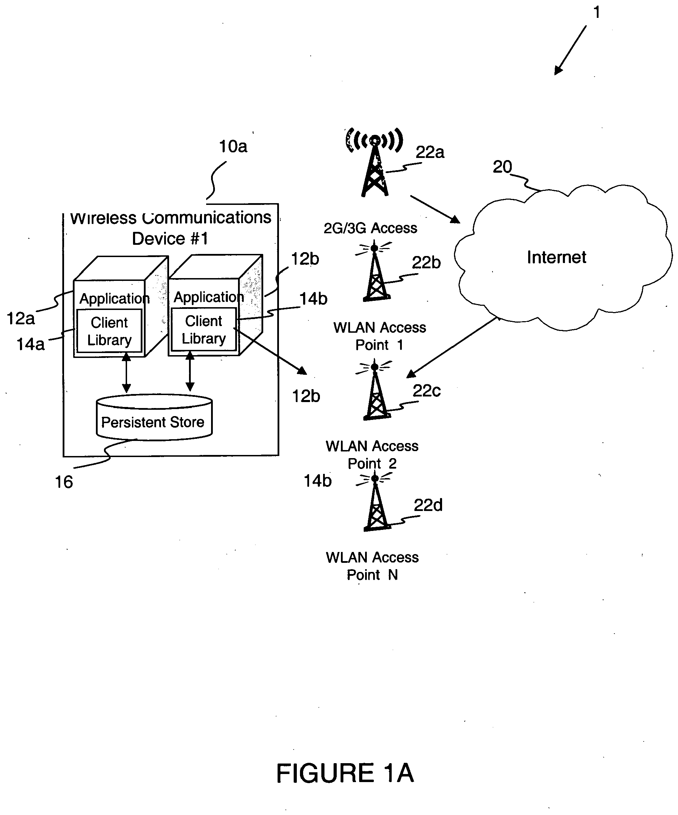

Figure 1A of the accompanying drawings shows a communications system according to an embodiment of the invention. The communications system comprises a wireless communications network within which a number of wireless communications devices operate although only one is shown for simplicity in Figure 1A. The wireless communications device 10a shown in Figure 1A comprises a number of software and hardware components which enable an application scheduler to be implemented on the device. The application scheduler performs scheduling based on historical information derived from passive and/or active measurements of connection conditions, for example, connection quality measurements.

The wireless communications enabled device 10a shown in Figure 1A can be any of a variety of devices which are capable of wireless data transmission (for example, a mobile telephone handset, PDA (personal digital assistant) or laptop computer).

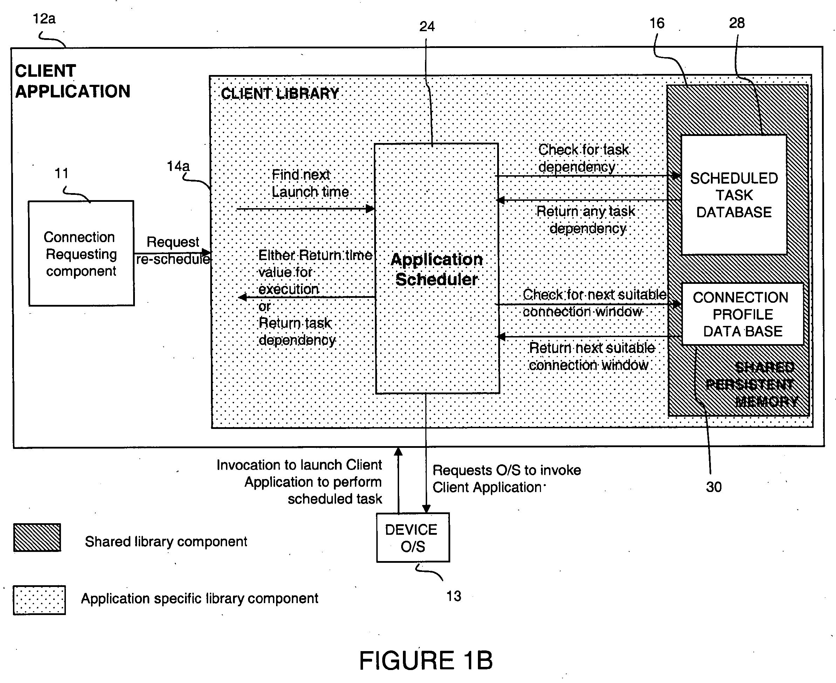

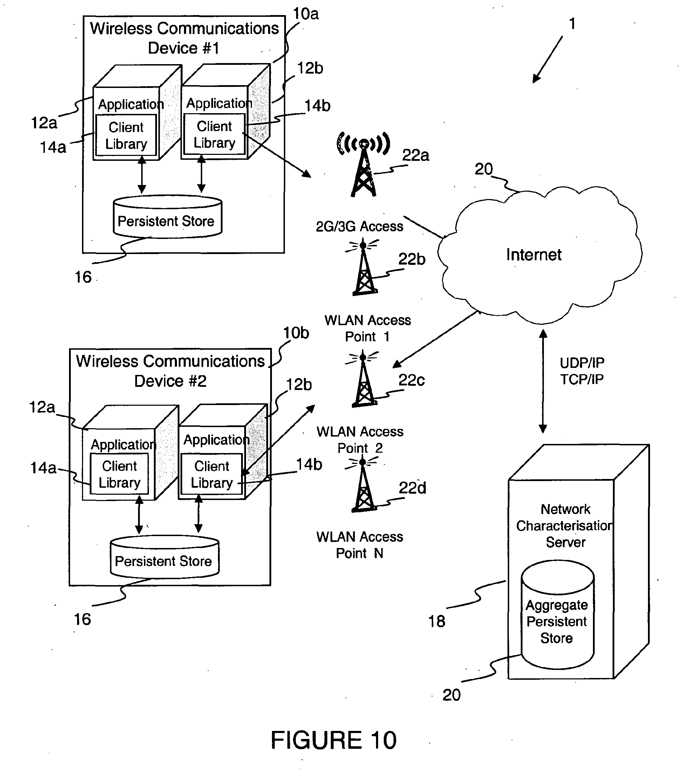

As shown in Figure 10a, communications device 10a comprises hardware and software communications technology arranged to enable the device 10a to establish one or more connections over a plurality of different types of access networks via access points (22a, 22b, 22c, 22d). Communications device 10a further comprises a multi-tasking operating system 13 (not shown in Figure 1A, see Figure 1B) arranged to support a plurality of client applications 12a,12b.

Communications device 10a further comprises local memory accessibly specifically by each client application 12a,12b and also a shared memory, shown in Figure 1A as a persistent memory store 16, accessible by all client applications 12a,12b comprising a client software library 14a,14b according to the invention.

Each client application 12a,12b comprises at least one daemon which performs a task requiring a connection with an access point 22a...d. In this context, a daemon is a computer program which runs in the background of a multi-tasking operating system rather than under the direct control of a user. Certain types of tasks which are run by background programs such as daemons (for example, a task associated with the synchronisation of an application running on the client communications device 10a with another device) can also be performed under the direct control of a user. A client application 12a will execute at least one task in background, and possibly more than one task. Unless directly stated otherwise, the inventor's preferred embodiment assumes that there is a one-to-one mapping between a task and a client application (which is equivalent to assuming one or more tasks performed by the same application can be collectively considered as a "task" if their connection requirements are collectively "combined."

An example of an client application 12a implementing a task requiring a connection to an access point 22a...d is a MIDlet application designed to run on a wireless Java enabled device 10a such as a mobile phone or personal digital assistant (PDA) type device. Each client software library 14a,b comprises a plurality of library components, some specific to the respective client application 12a,12b and some provided in a generic form to all client applications 12a,12b resident on the device 10a held in persistent memory 16.

Communications device 10a in the communications system 1 is capable of establishing a connection with an internet 20 via one or more access points 22a,b,c,d. It is assumed that at various locations and times, the communications device seeks to establish a connection via one or more of the access networks with communications network 20. Each access network may have
a) a differing range to another network available via another access point; and/or
b) differing areas of coverage; and/or
c) different connection quality; and/or
d) different network characteristics (which in turn may affect a),b) or c)).

As an example, in one exemplary embodiment access point 22a allows a 2G/3G(UMTS) connection to be established between communication device 10a and Internet 20 and access points 22b, 22c and 22d each allow communications device 10a to establish different types of wireless local area connection. In this exemplary embodiment, access point 22b is configured to enable a WiMAX (802.16) connection to be established with the communications device 10a; WiMAX (Wireless Microwave Access) enables fixed and mobile broadband access; access point 22c is configured to enables a WiFi (Wireless Fidelity) 802.11x type connection to be established with the communications device; and access point 22d provides yet another WLAN access point, for example, an ad-hoc access point such as one enabling a Bluetooth™ type connection to another device which is in turn arranged to access the internet 20 over a wired or wireless communications link.

In the embodiment of the invention currently preferred by the inventor, the communications device 10a is arranged to maintain one connection at a time and performs homogeneous and/or heterogeneous network handovers to maintain said connection. A network handover to the same type of network comprises a homogeneous network handover whereas a heterogeneous network handover is a handover to a different type of network. Both types of network handover enable connections to be established and maintained in a variety of static and dynamic network conditions and are implemented in any appropriate manner known to those of ordinary skill in the art.

In Figure 1B, a client application 12a comprises a network aware scheduling software client library 14a. The client library 14a is arranged to allow a connection requesting component 11 of the application 12a to interface with an application scheduler 24 library component of the client library 14a. The client library 14a further comprises persistent shared memory components (shown here to comprises scheduled task database 28 and connection profile database 30) which are shared with other client applications 12b incorporating an equivalent network aware scheduling client library 14b and which are hosted on the same communications device 10a as client library 14a according to the invention.

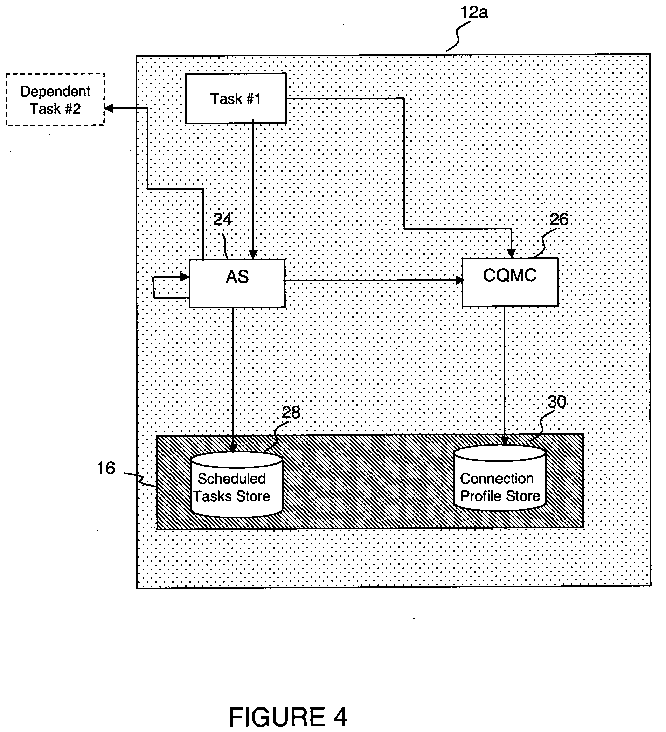

In some embodiments of the invention, a connection quality measurement software component (CQMC) 26 of the client library 14a may also be provided as an application specific component (not shown in Figure 1A, see Figure 4). The CQMC enables the communications device 10a to measure one or more network connection conditions either passively or actively during an on-going connection.

The connection requesting component 11 of the client application 12a is effectively any part of the client application 12a which generates a connection request to perform a task. Unless otherwise stated, a one-to-one mapping is assumed to exist between each task and each client application, and each task is identified using a task identifier TID. In order for each client application to successfully complete a task, data transmission over the wireless communications network is required. This means a connection must be established which meets one or more network connection conditions.

Each client application 12a,12b which requires a connection to complete a task has either fixed or varying connection conditions. Examples of connection conditions including: connection bandwidth exceeding a minimum value in one more directions; connection lifetime exceeding a minimum duration of time, and other connection conditions such as, for example, latency or transmission errors falling below a critical limit.

The connection requests generated by the connection requesting component 11 of the client application 12a may require network connections which vary in time and/or which vary depending on the amount of data and/or type of task to be performed. For example, a client application 12a performing a synchronisation task using a connection (to another device) may need to synchronise a large amount of data one day (and so a high bandwidth connection would reduce the synchronisation time) and to synchronise very little data on the next occasion it performs the synchronisation task (and so a low bandwidth connection may be used to synchronise the data).

Each time the client application 12a completes a task or fails to complete a task successfully, the connection requesting component 11 generates a re-schedule request which is passed to the client library 14a. The client library 14a then finds the next launch time using the application scheduler component 24 (also referred to herein as application scheduler 24) which checks for the next suitable connection window by querying the connection characteristics required to complete the task with the connection profile database 30 which indicates when a connection window having the required characteristics is next likely to be available. A connection window CDB[i] refers to a period of time of predetermined duration and retrieved by index i. The application scheduler 24 then checks to see if there is a task identifier TID#1 already associated with this connection window by querying the scheduled task database 28 held in the persistent memory store 16. The scheduled task database 28 returns the task dependency if any is found to the scheduler component by indicating the task identifier for the parent task TID#1.

If the task is not dependent on the completion of a previous task, the application scheduler 24 will then generate a record in the scheduled tasks database to indicate that in a particular connection window CDB[i] the task identified by TID#2 is to be performed by the client application 12a. If the task is dependent on completion of a previous task then the application scheduler 24 will then generate a record in the scheduled tasks database to indicate the task dependency, in this example, that task. TID#2 should be performed on completion of task TID#1.

When either the appropriate time value "i " arrives or a notification is received by the application scheduler component 24 that the parent task TID#1 has been completed, the client library 14a generates instructions to the operating system O/S 13 of the communications device 10a to invoke the client application 12a to perform the relevant task. Thus the operating system 13 launches the client application 12a either when the parent task TID#1 has been completed or at the specific time indicated by the returned time value.

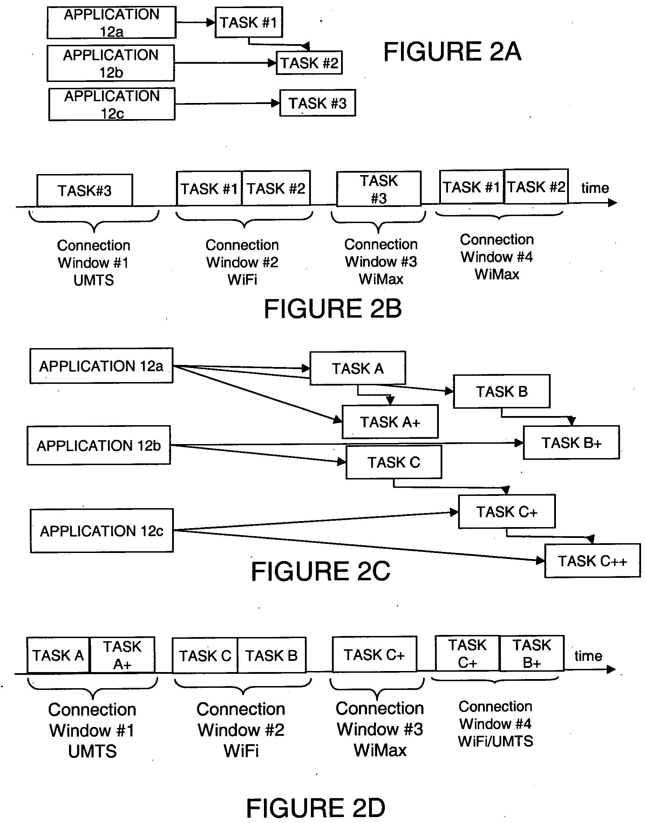

Figures 2A and 2B show how the scheduling application ensures no conflicts exist between three exemplary client applications 12a, 12b, and 12c where a one-to-one task to client application relationship exists. Figures 2C and 2D show how the scheduling application ensures no conflicts exist between exemplary client applications 12a..12c where a many -to-one how task to client application relationship exists.

Figures 2A and 2C also show examples of task dependencies. Here a dependent task is a task whose execution by a client application 12a...c is dependent on the successful prior completion of another task by the same or a different client application 12a...c. In the event that a task has a task dependency, i.e., if there is another task whose execution is dependent on the first task being successfully executed, the relevant application scheduler 24b,c will reschedule the execution time for dependent task whenever the first task is rescheduled. If a series of tasks have dependencies, each task is rescheduled when the parent task is rescheduled and the respective application schedulers will update the scheduled tasks databases to ensure that all required sequencing is maintained and no timing conflicts are generated.

In Figure 2A, client application 12a is scheduled to perform a task having the task identifier (TID)#1 at time t2. client application 12b is scheduled to perform a task having TID #2 after the task TID#1 has been successfully completed. client application 12c is scheduled to perform a task having TID#3 at time t1. Figure 2B shows how the tasks #1, #2, and #3 are scheduled for performance in various connection windows CW by the respective application schedulers 24a,b,c of each client application 12a...c. Each connection window CW relates to a specific network connection, lasts for a certain period of time (its connection duration), and has one or more network characteristics (e.g. bandwidth etc).
application scheduler 24a of client application 12a determines that the first connection window (CW) #1 is not suitable for completion of both task #1 and task#2 in the same connection and schedules task #1 for completion in connection window CW#2 at time t1. application scheduler 24c of client application 12c determines from the connections profile database that CW#1 has suitable characteristics and a connection of sufficient duration is likely and so schedules client application 12c to perform task #3 during CW#1 at time t1. When task #3 successfully repeats, application scheduler 24c reschedules it for performance in connection window #3 at time t1 + Δ3t. When tasks #1 and #2 both successfully complete, then application scheduler 12a reschedules task #1 for performance in connection window #4 at time t2 + Δ1t . Task #2 is not rescheduled to be performed at a specific time, instead, the scheduled task database notes that when task #1 is successfully completed, dependent task #2 should be performed, and this will trigger application scheduler 24b to request the operating system 13 to launch client application 12b to perform task #2.

Figures 2C and 2D show client applications 12a,b,c which each have a plurality of tasks having different connection requirements. In this exemplary embodiment, client applications 12a...c require connections to the Internet 20 to complete exemplary tasks A, A+, B, B+, C, C+ and C++. In Figure 2C, client application 12a (for example a calendar application) must establish an appropriate internet connection to complete task A (for example, to upload a diary list to a central server) before completing task A+ (for example, synchronising the diary list with over another user's device over internet 20 (for example, the user's home computer).

Application 12a also must also complete execute task B (for example, uploading an activities journal for various files) before another task B+ (for example, downloading all time-charged activities) can be performed by another application, Application 12b (for example, a time-charging application). In this example, the time-charging application 12b must also complete a task which performs a query action with a server to see if a bill should be generated for one or more clients (task C). Dependent on this task being completed, for example, the user might then be prompted to dictate a bill using application 12c (say a voice dictation application) which upload the voice data as an audio stream (task C+). Dependent on task C+ being successfully executed, Application 12c then downloads a copy of the written billing record created by the dictation (task C++) for local storage on the communications device10b . These applications & tasks are purely for exemplary purposes and those of ordinary skill in the art will appreciate that many other applications and tasks for a variety of scenarios can be scheduled using the invention.

Figure 2D shows how the exemplary tasks shown in Figure 2C can be scheduled by the respective application schedulers 24a,b,c of each client application 12a...c to run in connection windows CW#1, CW#2, CW#3, and CW#4 so that at each point in time, only one application is operating. It is assumed here that application 12a is invoked by the operating system 13 at a time predetermined by the application scheduler 24a as optimal for the network connection it requires to successfully complete tasks A and A+. Accordingly, it is assumed that in this case, the connection profile database 30 is already populated with sufficient information for the application scheduler 24a to determine if the network characteristics of each connection window are suitable (e.g., if the bandwidth of the connection window #1 will remain sufficiently high for the data transmission for execution of both tasks A and A+ to be completed). Here, application scheduler 24a has determined that task A+ is dependent on task A being successfully completed and both task A and A+ are to be completed in the same connection window. client application 12a also performs task B whose performance is independent of A or A+. Task B+ is dependent on the completion of Task B but is performed by client application 12b. Task B+ requires a different type of network connection than B requires. Task C+ is scheduled for completion after completion of task C. Task C++ .is dependent on task C+ being successfully executed.

As shown, in Figure 2D, tasks A and A+ are scheduled for execution in CW#1, Tasks C and B in CW#2, task C+ in CW#3, and tasks C++ and B+ in CW#4 by the respective application schedulers 24a,b,c. Also shown in Figures 2B and 2D are exemplary types of network supporting each connection window, e.g., connection window CW#4 comprises a WiMax network connection.

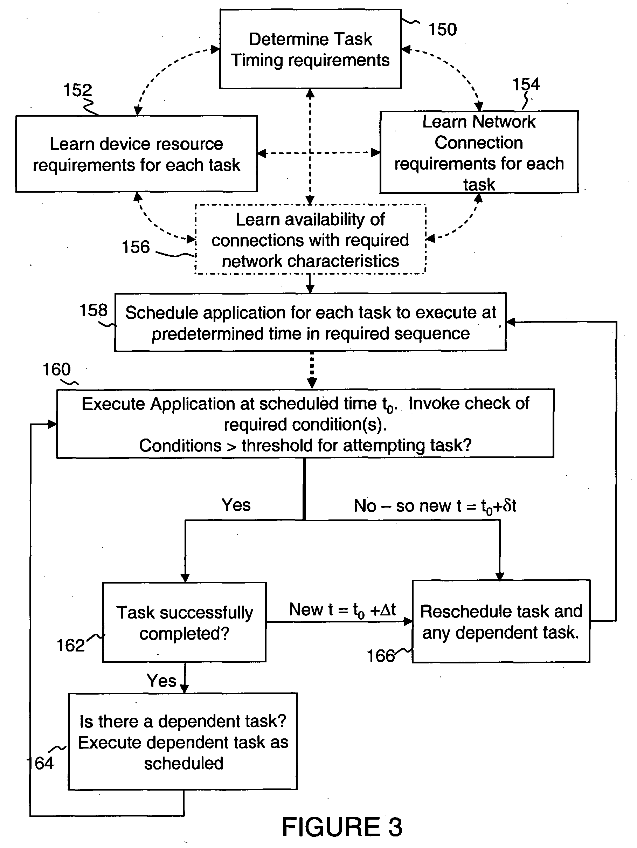

Figure 3 of the accompanying drawings shows schematically an overview of the steps performed by the application scheduler 24 library component according to one embodiment of the invention.

Firstly, the application scheduler 24 determines what are the task requirements 150, for example, how often should the task preferably be performed, if the task has a dependency on another task being successfully completed, is another task dependent on the task being successfully completed, etc. The application scheduler 24 also learns the device resource requirements (step 152), for example, such as processing power required to complete the task, the electrical power which might be required, the typical memory requirements to complete the task etc. The application scheduler 24 then determines the network connection requirements for each task (step 154). For example, is a secure connection required? What bandwidth is required? For how long must the connection be maintained to complete the task? What is the minimum latency the connection must support? What is the maximum error rate that is allowed? The availability of the connections with required network characteristics is either learned by the application scheduler 24 (step 156) or retrieved from the connections profile database 30. Where the application scheduler learns the connection characteristics, this is achieved using another library component such as a connection quality measuring component (CQMC) 26 operating in passive and/or active mode (described in more detail later hereinbelow). Accordingly, application scheduler 24 is arranged in one embodiment to implement task learning and network awareness learning.
In general, however, assuming that the task requirements are known to the application scheduler 24 and that the connection profile database 30 is accessible, the application scheduler 24 library component of each client application 12a will schedule when that client application's task is to be performed (say at time t₀) and if the task is successfully completed at time to, reschedule the task to repeat its performance at a subsequent time t₀+Δt or if the task is not successfully completed at time t₀, reschedule the task to be attempted again at time t₀ + δt, where δt ≤ Δt. Here Δt is the time interval between repeat performances of the same task (e.g., a weekly backup of data by the client application 12a with a remote backup server) and δt is the time interval between an unsuccessfully attempted task and the next time it is attempted.

When scheduling a task (step 158), each Scheduling Application 24 consults the scheduled task database 28 when seeking to determine appropriate values for □t and Δt to remove any potential conflicting scheduling when a plurality of client applications hosted by the same communications device 10a include the network aware scheduling client library. The values for δt and Δt are also checked by the client application 12a to ensure that the connection profile database 28 indicates a network connection having one or more required characteristics for that connection will be available.

At the scheduled time to, the application scheduler 24 instructs the operating system 13 to activate client application 12a to establish the required connection to perform the relevant task. In one embodiment of the invention, immediately after launch of the client application 12a but prior to any attempt to perform the task, the application scheduler 24 performs a check at the scheduled time t₀ to see if all required conditions (network, device, etc) for completion of the task are met (step 160). If the network condition is determined to exceed a predetermined requirements threshold for successful completion of the task, the client application attempts to perform the task at t₀, if not, then the client application aborts the task and reattempts at time t₀+δt (step 166). If the client application successfully completes the task at time to (step 162) a check is performed to determine if any dependent tasks are scheduled and if so, these are performed as scheduled (via step 160). If the task (or any dependent task) is not successfully completed then the task (and any dependent task) is rescheduled (steps 166, 158). If the task is successfully completed at time to (step 162) then the application scheduler 24 reschedules its execution at time to + Δt (step 166), where Δt is the minimum timing interval requested by the application between performing the task.

There are a number of application specific requirement(s) which the application scheduler library component 14a,b of each client application 12a,b supported on communications device 10a must take into account when seeking to schedule performance of a task requiring a connection via an access point 22a...d with internet 20.

One or more task completion requirements will be associated with the task that each client application 12a 12b is invoked by the operating system 13 at times which the application scheduler client library component 24 has determined from the connection profile database 30 is appropriate and which is consistent with the timing interval Δt requested by the client application since the task was last performed. The connection profile database 30 is populated with connection information by a connection quality measurement client CQMC application 26 which is another component of the client library 14a,b specific to each client application 12a,b and is described in more detail later hereinbelow. The timing interval Δt may vary for some client applications, for example, where a large amount of data has been generated on the client device 10a, this may require backing up at shorter intervals of time than when little data is being generated on the client device 10a. Other task timing requirements include whether another task is dependent on the task being successfully completed and/or whether the task itself has a dependency on another task being successfully completed.

In one embodiment of the invention, a client library component stores data which indicates the usage of one or more device resources when the respective client application performs a background task, and this information is also made available to the application scheduler 24 to take into account when scheduling that client application's task performance. In one embodiment, a user of the client device 10a indicates one or more minimum device resource requirements for the task(s) to be performed by the client application 12a,b such as, for example, a minimum of 30% of battery charge before implementing a back-up operation and/or a minimum 10% free processor capacity before downloading synchronisation data.

The network connection requirements (such a bandwidth etc can be determined actively from those of previous connections which have resulted in successful task completion) and/or be provided by the client application 12a,12b and/or be configured by a user of the communications device 10a.

These various requirements for a task to be completed can be collectively considered to comprise task completion conditions. Each time a task is either requested to be scheduled by a background running connection requesting component 11 of a client application 12a,12b, the application scheduler 24 client library component will consider what task completion conditions current must be met and assigns a task identifier TID. The application scheduler 24 then checks if there is an initial interval requirement Δt (or an initial start delay) for performing the requested task and/or any task dependencies (in either direction).

According to the invention, a connection profile database 30 stores data indicating what connections are likely to be available at a given point in time and the characteristics of the available connections. The population of the connection profile database 30 is performed passively by the client device 10a determining performance metrics from each client application or actively by the client device 10a measuring one or more characteristics of an on-going connection with.a remote server.

Figure 4 of the accompanying drawings shows schematically a client application 12a which performs task TID #1 in background includes a client library 14a which comprises an application scheduler library component 24 and a connection quality measurement client (CQMC) library component 26. Task TID #2 is dependent on the successful completion of task TID #1 and is performed by application 12b. To perform task TID #1 client application 12a requires a connection window CW to an access network for its successful completion for a duration D1, with a network profile NP. The first time the client application 12a requests connection it is configured to also provide an initial start delay Δ0t.

In this embodiment of the invention, the CQMC 26 passively determines the probable availability of connections with requirement network characteristics by collecting, processing and storing data associated with each connection established by client application 12a in a connection profile database 30 client library component. The information that the CQMC 26 generates for client application 12a which is held in the connections profile database 30 is located in a shared persistent memory so that other client applications 12b supported by the client device can access this information. Passive network profiling is implemented by the CQMC 26 determining at pre-determined times (e.g. periodic intervals or following one or more predetermined types of event) which type of connection is currently connected (if any) using purely local mechanisms provided by the client device operating system. For example, an event notification may be sent to the CQMC application 26 when a client application 12a begins and ends the transfer of data over a connection and/or for performance of a particular task over a connection (e.g., when a particular process is initiated). The data generated by the CQMC 26 is used to generate a connection profile which is stored as a record in a connection profile database 30 located in persistent memory means 16 of the device 10a.

Application scheduler 24 processes task completion conditions (for example, the network profile (which includes connection characteristics), the duration (D) of the required connection, and any start delay and any other conditions for completion of each task) and compares these requirements with the data held in the connection profile database 30. This enables scheduling data for that task (and including any dependent tasks) to be stored either as an absolute time value in scheduled tasks database 28 or as a task dependency in the scheduled task database 28. When task TID#1 is successfully completed, the application scheduler 24 will know from the scheduled tasks entry stored in database 28 that dependent task TID#2 should be executed.

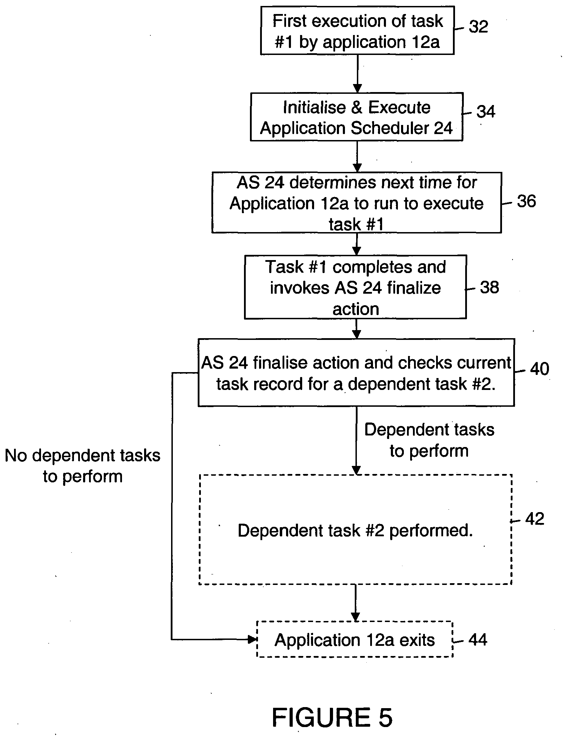

Figure 5 shows some more of the steps involved in network aware scheduling according to an embodiment of the invention in which the successful execution of task TID#2 either by client application #2 or client application #1 (in the case where a client application performs multiple tasks) is dependent on the successful execution of task TID#1 by client application #1.

Firstly, when task TID#1 is executed by the client application 12a, it triggers the initialisation and execution of the application scheduler 24 (step 34) with initial values for the duration of the connection D, a network profile NP, and a start_delay time Δ0 (if one is required). The application scheduler 24 then determines when the client application 12a should next perform the same task #1 (i.e., AS 24 determines a value for the time interval Δt (step 36)) once task TID#1 has been successfully completed, and it may also determine a time interval δt after which to repeat the task TID#1 if the first attempt at completion of the task is unsuccessful.

Assuming here that the task #1 completes, client application 12a is configured to invoke an application scheduler finalise action (step 38) which checks the record for task TID#1 held in the scheduled task database 28 for any dependent task(s) and timing constraints (step 40). If no dependent tasks need to be performed, then as the client application 12a is already configured to re-execute the same task TID#1 after a predetermined time interval Δt, it can safely exit (step 44). The dotted step outline shown in Figure 5 indicates the exemplary scenario where the data record held for task #1 indicates a dependent task #2 is to be performed within the same connection window. In one embodiment, where a "task" might comprise a series of sub tasks and/or where a plurality of separate tasks are performed by the same client application 12a, the dependent task is performed (step 42) before client application 12a exits (step 44). If the data record indicates a different client application 12b is to perform a dependent task, then client application 12a exits first (step 44) before client application 12b is started (step 45) to ensure that only one application is running at any time. The dependent task is then performed (step 47) by client application 12b. If task TID#2 does not complete successfully, there is no need to repeat the performance of task TID#1, however, in alternative embodiments of the invention this may not always be the case and it may be necessary to repeat both tasks in the same connection window.

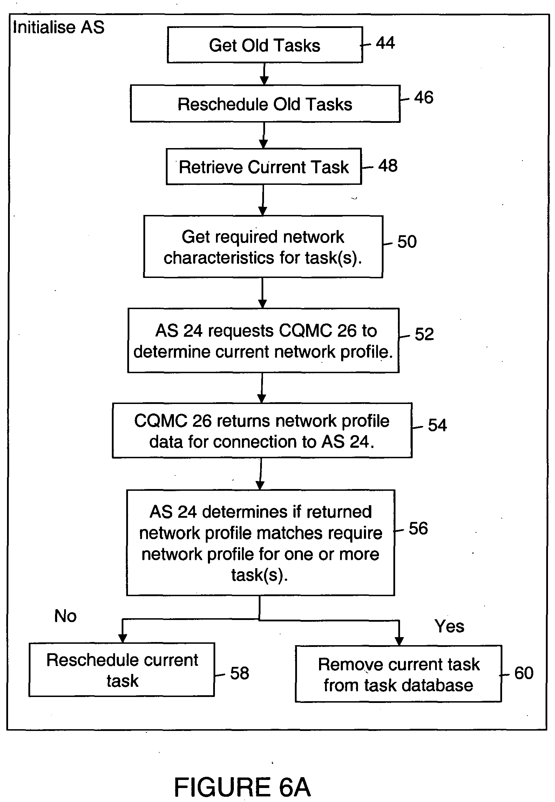

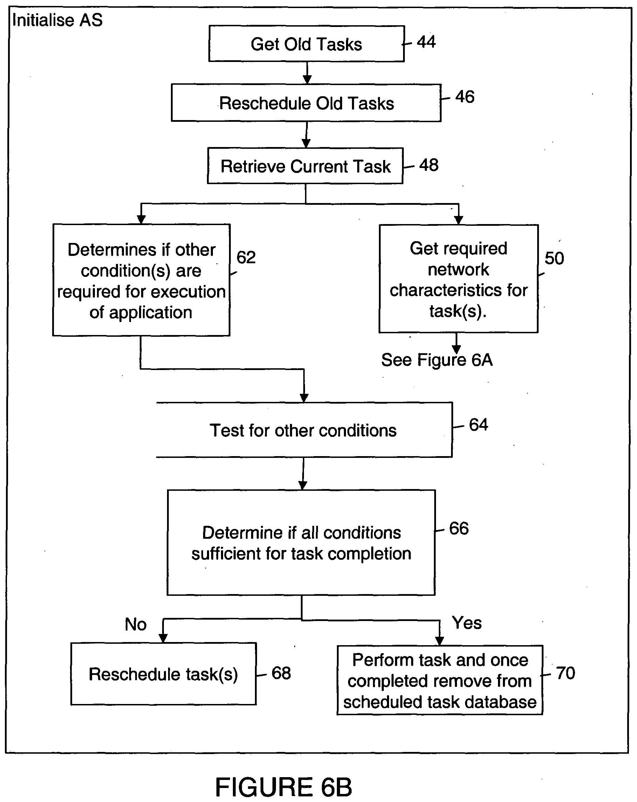

The initialisation step 34 shown in Figure 5 will now be described in more detail with reference to Figures 6A and 6B, which retain the numbering scheme shown in Figure 5 for like elements. Figure 6A shows in more detail how the application scheduler (AS) library component 24 is initialised when invoked by client application 12a.

Either the AS 24 performs a look-up operation on scheduled task store 28 based on what tasks are scheduled for the current connection window CW0. This enables the AS 24 to retrieve information indicating for old tasks scheduled for that connection window CW0 (step 44) which have not yet been performed by that client application 12a or by another client application (e.g. client application 12b). Alternatively, the application scheduler 24 retrieves data records for tasks in order of the oldest scheduled execution time. In this way, those tasks which have not been performed for some time since their last scheduled time for performance are prioritised by default for rescheduling in the current connection window CW0.

In the embodiment shown in Figure 6A, application scheduler 24 first retrieves records associated with old tasks (step 44) and reschedules these (step 46) before retrieving the record for the task which the client application 12a is currently configured to execute (step 48). Collectively, the task records enable the application scheduler 24 to determine the network connection characteristic(s) to complete all retrieved tasks (old and current) (step 50). The application scheduler 24 then requests the CQMC 26 to determine the current network profile (step 52). The CQMC 26 returns the current network profile (based either on passive or active measurement) to the application scheduler 24 (step 54). The application scheduler 24 then performs a comparison of the network characteristic(s) of each available connection(s) with those required to complete the scheduled task (step 56). If the network characteristic(s) available on a network connection of exceed the threshold value(s) required to complete the scheduled task(s), the client application 12a is initialised to perform the task(s) and once complete the task is removed from the list of current task data records in the scheduled task database 28 (step 56). If the network characteristic(s) for any one connection do not exceed those required for completion of the current scheduled task(s), the current task(s) are rescheduled (step 58).

Figure 6B shows an alternative embodiment in which like steps retain the numbering scheme shown in Figure 6A. In this embodiment, at step 62 any other conditions required for execution of the application are determined by the application scheduler 24. These conditions are then tested for prior to the client application 12a performing the scheduled task (step 64). The application scheduler 24 then determines if all required conditions (including required network characteristics of any available connection) are available on any one connection (step 66). If so, then the scheduled task is performed using that connection in that connection window and the scheduled task database 28 is updated to remove the task from the current task status (step 70). If none of the available connections have the required conditions, then the task is rescheduled (step 68).

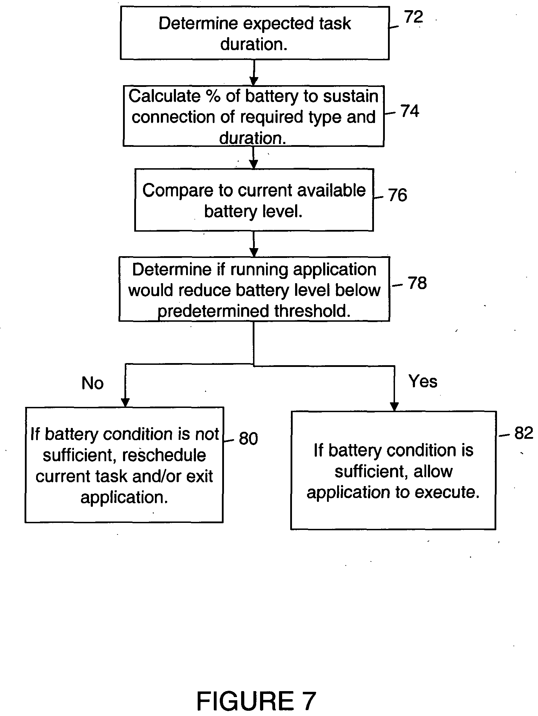

An example of the steps required to determine the availability of other resources which are taken into account in the embodiment shown in Figure 6B is shown in Figure 7. In Figure 7, the other resource comprises a device hosted battery resource. In step 72, the expected duration of the task(s) is determined by the application scheduler 24 from the scheduled task database 28. The application scheduler 24 then retrieves battery performance data (which is gathered in any appropriate way known to those of ordinary skill in the art) to determine the % of battery power resource required to sustain a connection of the type required for performance of the scheduled task(s). The application scheduler 24 then determines if the current battery power level is sufficient (76) and if the battery power will be maintained above a predetermined threshold when the scheduled task(s) are completed (step 78). If both conditions are not satisfied (sufficient current available power and sufficient post task completion available power) then the current task(s) are rescheduled and the application exits (step 80). If both conditions are satisfied, then client application 12a is allowed to perform the task (step 82).

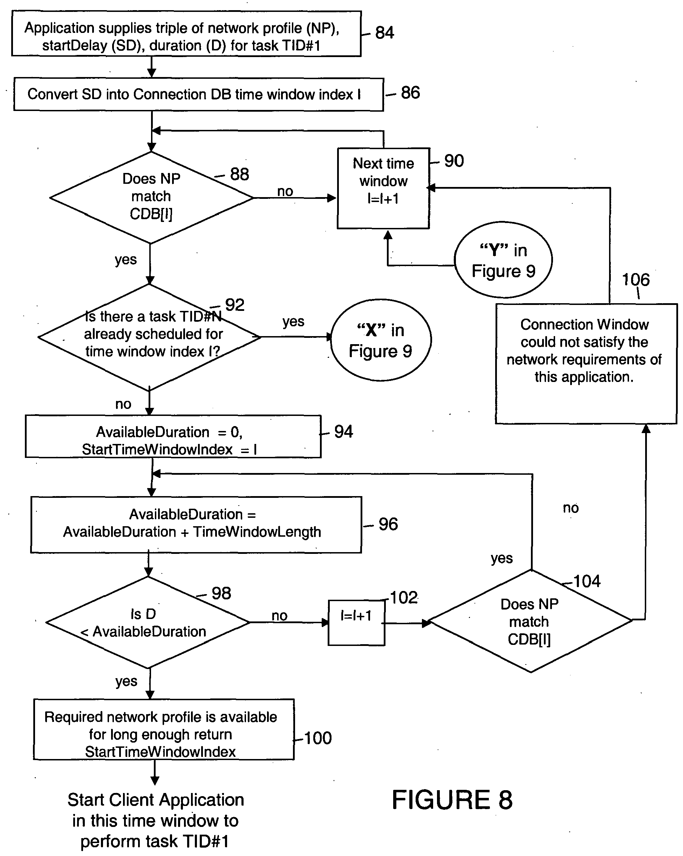

Figure 8 shows in more detail a flow chart indicating the steps implemented when performing a network aware application scheduling process according to the invention. client application 12a first provides a tuple of data indicating the required network profile (NP), the required start delay (SD) (i.e., the initial Δ0t) and the duration of the required connection (D) (step 84) for task TID #1 which is to be scheduled. The application scheduler 24 then converts the start delay (SD) of the required connection into a connection database 30 record entry in which the required task is associated with a time window of index I (step 86). When the time window with index I is reached, the application scheduler 24 then determines if the NP matches any connection database record with the same time index, e.g., if a matching connection profile entry with identifier CDB[I] exists (step 88). If no match for a connection profile for the given network profile of Task TID #1 is found in step 88, then the process of step 88 is repeated for the next time window (step 90), i.e., index I is incremented by 1, and a look-up is performed to see what connections are likely to be available in that time window to determine if any of them have the right network characteristics (i.e., what connection windows CW are available in a given time window).

If the NP does match a network profile in the available CDB[I] of the current time window, then the application scheduler determines if there is a scheduled task for that window from the scheduled tasks database 28. If a task has been scheduled for the time-window, the application scheduler 24 determines the scheduled task ID (TID) (step 92). If no task has been scheduled to start in that time-window, then the available duration parameter characterising the duration of the currently available connection window for that task is set to 0 and the start time index for that task is set to I (step 94). The available duration for the current time window is then incremented to a value equal to the previous time window value plus the current time window length (step 96).

The application scheduler 24 then determines if the required duration D to complete the scheduled task(s) is less the available duration (which equals the currently available time window) (step 98). If yes then the required network profile for the task(s) to be completed is considered to be sufficient as the right type of connection will be available for a long enough duration for the client application 12a to complete the scheduled task(s) (step 100).

If the required duration D is more than the available duration (step 98) then the time window index I is incremented by 1 (step 102) and the application scheduler 24 repeats the process of determining if the network profile (NP) matches the connection database profile record for that time window index (step 104). If there is a match for the connection characteristics (i.e., if the required network profile = the connection database profile) then process repeats step 96 (i.e., the available duration is set to be increased by the length of the time window for index I+1. If there is no match between NP and any of the records in the connection database 28, then the time window does not satisfy the network requirements for the client application 12a, and the search process is repeated with the next time window index I+1.

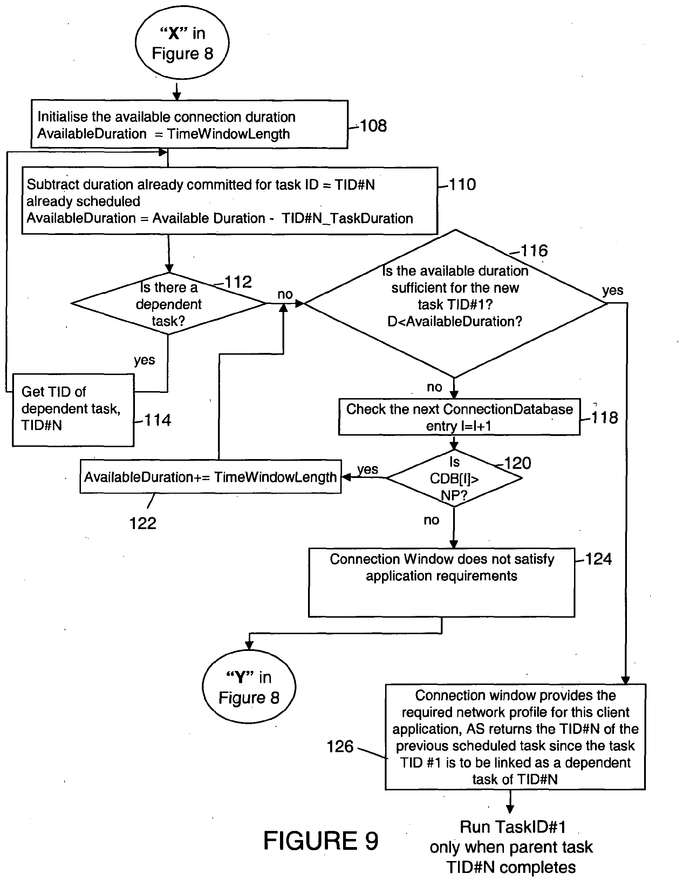

Referring now to Figure 9 of the accompanying drawings, if the NP for the current task TID#1 does match the connection database record entry having index I for the current time window CDB[I] and the application scheduler 24 determines if there is a scheduled task for the current time window, then the process moves to point "X" in Figure 9 at step 92 and the available connection duration is initialised by setting the Available Duration = TimeWindowLength (step 108). The duration of the connection window (CW) required to complete the current scheduled task with identifier TID #1 is subtracted from the available duration as this part of the time window is already effectively committed. This updates the actual available duration to be equal to the available time window duration determined in step 108 less the duration required for completion of the task with the relevant TID#N identifier (step 110 in Figure 9). The application scheduler 24 then determines if there is a dependent task (step 112). If there is then the task identifier TID#N of the dependent task is retrieved from the scheduled task database 28 (step 114) and the process repeats step 110 for the dependent task. The process repeats through any dependent task hierarchy until no dependent task exists at which point the application scheduler 24 determines if the available duration is sufficient for the new task (i.e., is D < Available Duration determined in the final iteration of step 110 where dependent tasks exist).

Assuming that in the case where there is a connection with a sufficiently long duration available, then the connection window has a suitable NP matching that required by client application 12a to complete task TID#1. It is assumed in this case that it is necessary for the previously scheduled task (and any dependent tasks) TID#N must be first successfully executed before the task TID#1 is executed. This means that task TID#1 is treated as a dependent task of the final TID#N task and the application scheduler 24 returns the TID#N of the task on which TID#1 is dependent (step 126). No absolute value for the execution time of task TID #1 is determined in this case, instead the application scheduler only requests the operating system 13 to launch application 12a when the parent task(s) TID#N have all been successfully completed.

If the available duration of the time window has a duration less than the required duration for completion of task TID#1, the index for the next time window record held in the connection database 30 is checked (i.e., the next network connection having a connection profile within the next time-window is index I++) is checked by the application scheduler 24 (step 118). If this connection database record entry CDB[1] matches the required network profile (step 120), then the available duration is reset to include the original time window and the new timewindowlength (step 122). If the characteristics of the connection record data based 30 at time I=1 are less than those indicated as required by the network profile NP for a particular task to be successfully performed, then the connection window will not satisfy the task requirements and the process of searching for an appropriate connection in an appropriate time-window recommences (step 124), and the process reverts back to step "Y" in Figure 8, i.e., the time window is incremented by I (I=I+1).

As mentioned above, in one embodiment of the invention, the CQMC 26 shown in Figure 4 uses local mechanisms to detect the quality of the connection, e.g. the duration of the connection and the number of bytes transferred or local connection application programming interfaces (APIs) etc which indicate the type of connection. For example, in Unlicensed Mobile Access (UMA) networks the cell identity (Cell ID) can be used to determine when a client device is connected via UMA. UMA is a standard which can be used for access to Global System for Mobile (previously known as Group Speciale Mobile) mobile networks over broadband connections. The GSM standard is well known for digital cellular communications and has been widely adopted across Europe and other territories. The GSM standard operates in the 900 MHz and 1800 MHz bands and provides a host of services thanks to a sophisticated signalling system. Examples of UMA networks include Bluetooth networks, Wireless LAN (WLAN) networks etc. The various types of UMA communication networks can exhibit huge variability in terms of both static and dynamic network characteristics.

The passive mode described hereinabove provides a less accurate measurement of the connection quality since it is dependent on applications 12a,b notifying the CQMC 26 accurately when data is transferred. It is also only able to measure bandwidth and not able to measure packet loss or return trip time (RTT). The passive mode does not incur any additional network usage however which reduces the network usage cost of implementing the connection quality measurement and reduces battery use.

Any profile determined by the application scheduler 24 is used to determine when an application 12a,b should be executed to maximise the probability that the application execution will coincide with the required network connection and that the available connection will match the applications expected requirements in terms of for example up/downlink bandwidth, latency, packet loss etc.

Figure 10 shows an another embodiment of the invention in which a connection quality measurement client library component 26 is included in the client library 14b which enables active connection quality measurements to be made. In Figure 10, like elements retain the numbering scheme of Figure 1B. In Figure 10 an additional communications device 10b is shown which also comprises a number of client applications 12a,12b (although in practice there is no need for these to be of the same type as those run by communications device 10a) which also perform various tasks in background.

In this communications system, a network characterisation server 18 comprising persistent memory means 20 is also provided. The persistent memory means 20 of the network characterisation server 18 allows network characteristics to be aggregated for a plurality of network connections from one or more of devices 10a,10b as the server 18 has network presence. This means that the server 18 is able to provide data to the network aware client library software 14a,b which indicates one or more characteristics of a plurality of available network connections (regardless of whether these were established by communications device 10a or by device10b).

Aggregated data on network characteristics is used to support network connection quality measurements. The client applications 12a, 12b exchange TCP/IP and UDP/IP packets with the server 18 in order to perform real-time dynamic measurement of the connection quality over Internet 20, for example, latency, jitter, bandwidth, congestion etc may be reported. Any measurements made are stored in the server 18 to allow aggregation of information across multiple client devices 10a,10b associated with different user identities as well as aggregation across multiple client devices 10a,10b associated with the same user identity. Each client device 10a,10b is capable of supporting multiple network bearers e.g. GPRS, UMTS, WLAN and be able to connect via a range of access points 22a,22b,22c,22d.

As in the case for the embodiment shown in Figure 4, there is no separate scheduling service or process that runs in the background or is provided by the operating system of each communications device 10a,b. Instead scheduling is a distributed function managed by all the client applications 12a,12b that use a network aware scheduling application implemented using client library 14a,14b.

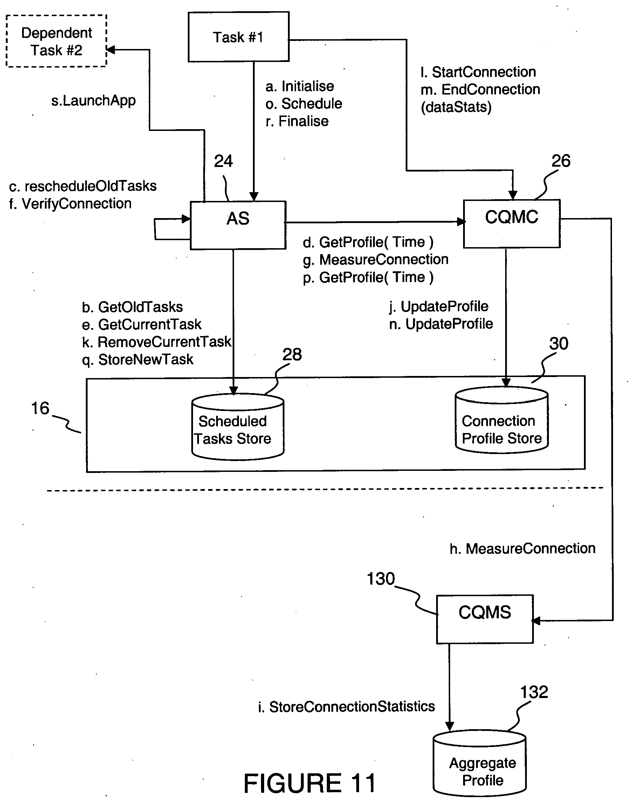

Referring now to an embodiment of a network aware application scheduling system shown schematically in Figure 11 (which retains the numbering scheme of Figure 4 for like elements), tasks #1 and #2 are assumed here to be implemented by separate respective client applications 12a, 12b. Each client applications 12a,12b is arranged to use a client library 14a,14b respectively comprising an intelligent application scheduler (AS) and a Connection Quality Measurement Client (CQMC) application 26. The persistent memory means 16 shown Figure 10 comprises a persistent data store for a connection profile database 30 and a data store for a scheduled tasks database 28. Memory means 16 is common to all applications and application components 12a,12b, 24, 26 on the same client device, and the CQMC application 26 will create the memory means 16 as a persistent data store if persistent memory means is not already present on the client device 10a,10b. In this embodiment applications 12a,12b are able to invoke the CQMC application 26 to work in active mode but in alternative embodiments, the CQMC application can be invoked to work actively and/or passively.

Figure 11 shows various steps performed by each component of the network aware scheduling system:
a) Performance of task #1 by client application 12a initialises application scheduler 24;
b) application scheduler 24 then determines retrieves a list of other applications 12a,b which did not successfully finish executing tasks the last time application scheduler 24 was initialised from the scheduled task database 28.
c) The application scheduler 24 reschedules tasks to be performed by the previous non-executed applications 12a,b.
d) The application scheduler 24 generates a request which is sent to the CQMC 26 running on the client device 10a which instructs the CQMC to return information on one or more prevailing network conditions.
e) The application scheduler 24 determines what network condition(s) is(are) required for the old tasks and for the task currently scheduled for execution by retrieving this information from the ST database 28.
f) The application scheduler 24 then verifies that the network condition(s) required are met by the current network conditions returned by the CQMC 26 for the old task(s) and/or for the current task.
g) The application scheduler 24 either retrieves one or more network profiles for connection windows held in the CQMC for the current time window and/or requests the CQMC to measure one or more network conditions of the connection established by the client device with the relevant access point.
h) If the CQMC is operating in active mode, then the CQMC 26 processes the received request and generates a measure connection request which requests data for the one or more network conditions indicated in the request generated by the application scheduler 24 from a network aware connection quality server 130, for example, a Connection Quality Measurement Server (CQMS) 130 shown in Figure 10. The network aware server 130 will then perform the relevant network tests and returns the results to the CQMC 26.
i) In one embodiment of the invention CQMS 130 also stores the resulting connection statistics in an aggregate profile database 132 which associates an average value for each recorded network condition according to the type of connection.
j) When the CQMC 26 receives the connection measurement from the CQMS 130 it updates the connection profile in the CP database 30 by storing the parameters returned by the CQMS 130 as appropriate.
k) The Application Server 24 assesses the probability that the client application 12a will successfully execute and if this exceeds a predetermined threshold, removes the current task listing from the ST database 28.
l) The client application 12a informs the CQMC 26 of the start of any data transfer when an appropriate connection has been established.
m) The client application 12a informs the CQMC 26 of the end of any data transfer and/or generates one or more items of statistical data which are also provided to the CQMC 26.
n) The CQMC 26 then updates the connection profile store.
o) The client application 12a schedules its next execution.
p) The application scheduler 24 requests the CQMC to return details of the connection.
q) The application scheduler 24 stores a details of the new task in the ST database 28.
r) The application scheduler determines if a dependent application 12a exists as the application 12a finalises from the scheduled tasks database 28.
s) If a dependent application exists, the application scheduler 24 library component associated with client application 12a updates the scheduled tasks database to ensure that the application scheduler library component 24 associated with client application 12b instructs the operating system 13 to executes the client application 12b to launch so that dependent task #2 is performed.

Where a plurality of tasks require scheduling, the application scheduler library component incorporated in each client application 12a, 12b sequences the tasks stored in the scheduled tasks database 28 to ensure that the client applications 12a,12b required to perform the tasks are executed sequentially. This is useful in application environments, e.g., mobile Java, which only support execution of one application at a time. Even in other mobile operating environments sequential execution can be advantageous since it removes the interaction between multiple applications competing for the-same bandwidth. Since these applications are also executing effectively autonomously and in the "background" ensuring that one application only runs at one time has the advantage of minimising computer processor unit (CPU) load thereby reducing the impact on any foreground applications that the user is interacting with.

The software client library 14a components will now be described in more detail. As shown in the embodiments of Figures 1B, 4 and Figure 11, the client library 14a uses a persistent storage area provided by the client devices' software environment, for example, such as the Record Management Store (RMS) store which the J2ME operating environment provides, to store shared library components. The persistent storage area 16 comprises connection profile database 30 and scheduled task data base 28. The scheduled task database 28 is indexed in terms of the applications required to execute tasks, by a task identifier (TaskID) and by the scheduled task execution time and date. The scheduled tasks database 28 is populated with records by the application scheduler component 24 of the network aware scheduling client library and the connection profile database 30 is populated by the CQMC component 26 of the network aware scheduling client library. The connection profile database 30 is holds data which indicates when a connection can be expected to be available and the scheduled tasks database 28 holds data on which tasks are already scheduled.

The CP database 30 is updated by the CQMC 26 which is called directly by a client application 26 beginning and ending a data transfer session. In one embodiment of the invention, in order to ensure the CP database 30 is properly populated, a special CQMC invocation application (not shown in Figure 2) is provided on the client device 10a,10b. The special CQMC invocation application is scheduled to execute when other applications 12a,12b are not running and whose purpose is simply to invoke the CQMC active mode to generate entries to populate the connection profile database. Over time the CQMC invocation application is scheduled to run less frequently (i.e., the intervals between when it is run will increase) as real application connection use data is accumulated.
The way in which the Connection Profile CP database 30 is populated by data supplied by the CQMC will now be described with reference to particular embodiment of the invention. The CQMC generates records which will differ in their initial content according to whether the CQMC is operating in an active or passive mode. If the CQMC operates in passive mode, then a partially populated data record is generated, whereas more information is captured when the CQMC operates in an active mode. A CP database record comprises a plurality of fields enabling one or more characteristics of a network connection to be associated with timing information. For example, in one embodiment of the invention, the data is supplied with record fields containing one or more of the following parameters: Time of day, date, connection type [-optionalname], uplink bandwidth, downlink bandwidth, RTT, Jitter, Packet Loss.

The connection type parameter may optionally include information about the particular access network used, for example, an Internet Access Point name or WLAN access point Service Set Identifier (SSID - which can function as an identifier for the WLAN) (see also 22a,b,c,d in Figure 1). For example, see a couple of CP database records could comprise the following connection profile information which has been generated by the CQMC operating in passive mode:
i) 19:40:00, 21/01/07, WLAN,-1,-1,-1,-1,-1
ii) 21:00:00, 27/01/07, WLAN-BTOpenzone, -1, 200000, -1 ,-1
whereas a more complete record such as that shown below is supplied by the CQMC providing an active measurement:
iii) 20:00:00, 21/07/07, WLAN, 128000, 512000, 125, 30, 1

The CP database 30 arranges its data records into data aggregations, each data aggregation being associated with a particular network connection type (e.g. GPRS, 3G, WLAN etc). For example, in one embodiment, the data aggregations are arranged as a number of tables, one table per network connection type.

Each table comprises a number of entries representing the average connection quality within a specific time window. Each entry represents the average value of records supplied by the CQMC within a predefined time window. The average value is determined using techniques known in the art, for example, by averaging all records received to date or alternatively by generating a running average calculated across the last "N" records.

The time windows represent arbitrary segments within a predefined repetition pattern of a week or month, depending on the expected repetition pattern of the user behaviour. For example, assuming that the table covers a weekly repetition pattern at a granularity of 30min windows then there will be (7*24*60)/30 = 336 entries in the table. Each entry contains the averaged connection quality for that network type at that point in the week. Null entries (entries containing zero values) indicate that the particular type of network connection was not available during that particular time window.

**TABLE 1: An example of a CP database 30 table.**

| Time Window Index | Uplink Bandwidth | DownLink Bandwidth | RTT | Packet Loss | jitter |
|---|---|---|---|---|---|
| 1 | 128000 | 512000 | 300 | 1 | 20 |
| 2 | 0 | 0 | 0 | 0 | 0 |
| 3 | 0 | 0 | 0 | 0 | 0 |
| 4 | 256000 | 8000000 | 120 | 0 | 20 |

The ST database 28 comprises data records, each representing at least one scheduled task (and potentially a link to trigger execution of another task), although those of ordinary skill in the art will appreciate the database may be specifically structured in variety of ways in various embodiments of the invention. Each task record comprises:
a task identifier ("task ID"),
the path to the executable application (for example, a class name for the MIDLet), and
timing information for the execution of the application, for example, the actual scheduled date/time of execution, and/or the expected duration of the connection.

In one embodiment of the invention, the application scheduler schedules execution of multiple applications in a predetermined sequence, and each entry in the ST database 28 contains a link to another dependent task ID. This enables completion of one application to be used to trigger the execution of the next application in sequence. This is useful when it is not possible to have 100% certainty when a particular application is to terminate. Table 2 shown below provides an exemplary data structure format for the ST database 28. In Table 2, the scheduled execution window corresponds to the time window index in which the application is expected to run.

**TABLE 2: An example of a ST database 28 data structure.**

| Task ID | Scheduled Execution Time (time window index) | Scheduled real time | Application path | Expected Execution Duration (secs) | Dependent Task ID | Network profile |
|---|---|---|---|---|---|---|
| 1 | 3 | 07:00:00 25/01/2007 | Com.bt.demo.MIDIet1 | 300 | 4 | WLAN, -1, 128000, -1, -1, -1, -1 |
| 2 | 7 | | Com.bt.demo.MIDIet3 | 400 | | GPRS, -1, 20000, -1, -1, -1, -1 |
| 3 | 10 | | Com.bt.demo.MIDIet4 | 200 | | |
| 4 | | | Com.bt.demo.MIDIet2 | 100 | | |

The operation of an embodiment of an application scheduler client library component 24 according to one embodiment of the invention will now be described in which the application scheduler 24 is configured to determine one or more requirements for one or more applications to establishing a connection with a communications network to allow a particular task associated with a respective application to be successfully completed. Each application has one or more tasks to perform requiring a network connection. In some embodiments, an application has different tasks to be performed with different requirements in terms of the duration of the connection needed, timing requirements, intervals for repetition, and network characteristics. For example, tasks such as uploading a picture or downloading a video file, or synchronising (in either or both directions) a diary result in very different network connection requirements. For example, a download video data type task and an upload an address book contact data type task may require not only differing latency and jitter requirements but also differing congestion levels in different directions along a communications link.

Once the application scheduler 24 has determined one or more network requirements for a particular task to be performed by each task requiring a network connection for completion, the application scheduler must determine if the current conditions of a suitable network connection will enable the task to be successfully completed. This requires a measurement to be made of the current characteristics of each available network connection and an estimate to be generated of the likelihood of the network connection remaining available for the duration required to complete the task. Where one or more tasks are dependent on the previous successful execution of another task, the application scheduler 24 must verify that the previous task has been previously successfully completed within a predetermined time-limit or assess the total time to complete all tasks having an inter-dependency. A dependent task may be dependent on the successful completion of another task by the same application or on the successful completion of a task by another application.

The application scheduler 24 maintains the scheduled task database, determines the next available execution time and interacts with the device operating system to request the execution of applications at a specific time. The application scheduler 24 bases its scheduling decisions on network-connection characteristic information including:
i) the current quality of an available network connection; and
ii) the likely duration of each available network connection above a minimum quality threshold.

This network-connection characteristic information is provided by the CQMC 26 and is based on measurements performed in the network either in the form of an individual connection profile data set and/or in the form of an aggregate connection profile data set (which is provided by a connection quality measurement server 130 which is aware of a plurality of connection profiles in one or more networks). In this embodiment the CQMC is operation in active mode and the data returned by the CQMS 130 to the CQMC 26 enables a series of historical records of available connections at different times to be stored over time in the CP database 30 by the CQMC 26 (see step j shown in Figure 11). The information stored in the CP database 30 is used by the client library 14a to build a profile of the expected availability of different qualities of network connection over time. In particular it is used to predict when a network connection will become available in the future. In this embodiment, step i shown in Figure 11 is implemented and the connection measurements are stored in persistent memory means 132 associated with the network CQMS 130 (shown as an aggregate profile (AP) database 132 in Figure 11) as well as in the mobile client persistent memory means 16 (shown in Figure 11 as CP database 30). The network CQMS 130 aggregates connection information across multiple clients 10a, 10b (see Figure 10) and this aggregated connection information is shared with the mobile client 10a,10b as part of the connection test measurement (step h in Figure 11).

Figure 6A showed certain steps performed when initialising a application scheduler 24. In this embodiment, more specifically, application scheduler 24 retrieves stored tasks from the persistent memory store scheduled tasks database 28 (step 44). Then, the application scheduler 24 re-schedules any out-of-date tasks that are still present in the scheduled tasks database 28 (step 46). An out-of-date task will remain stored in the scheduled tasks database 28 if the client application 12a,12b required to implement the task did not execute when it was scheduled to. This can be for a variety of reasons, such as, for example:
on power-off as for mobile devices it is quite possible that the device may have been powered off by the user when a particular application was scheduled to execute; and/or
if the user manually blocked the application from running if the user is asked for permission whenever an application automatically attempts to run and/or or if the user starts another application using a conflicting resource; and/or
if the user was already running another application.

The latter is often a result of the device resources available, as some devices only allow a single running application at any one time. If the user has manually launched an application and the automatically scheduled application attempts to launch another application then the automatic launch may fail due to the existing running application utilising various resources.

The application scheduler component 24 then ensures the required connection is available for the current task to be performed by client application 12a. This requires the applications scheduler 25 to perform the following steps:
i) Retrieve the current task and its associated required network profile;
ii) Query the CQMC to verify that the current connection matches the expected profile (this may involve a passive or active measurement);
   a) If not reschedule the current task for the next best time;
   b) If is does then remove the current task from the task database

As well as testing that the current network connection is adequate for the task(s) to be performed by the client application(s) 12a,12b , the application scheduler 24 can also test other factors that may influence the desire to run the application such as were discussed hereinabove in the context of Figure 6B and 7. For example where available, the application scheduler can compare the application expected duration, the network connection type and the current battery level to determine whether it is appropriate for the application to run now or whether it should be delayed to a later date. For example, as was previously shown in Figure 7, the application scheduler can be configured with a battery use per bit transfer for each network type. Given the current task's requested network profile it can calculate the % of battery required to sustain a connection of the required type for the expected duration it can then compare this to the current available battery level and if running the application would reduce battery level below a predefined threshold then the application would be rescheduled for a later date, the application would then be notified that it should exit immediately.

Thus there are two main actions that the application scheduler 24 performs when a client application 12a has completed its scheduled task and exits.
1. Determine the next time for this application to run
2. Launch any dependent application associated with the current task.

When a client application 12a finishes, it generates a request to the application scheduler 24 to schedule it again in the future. This request contains a requested network profile, a minimum delay to start, and maximum required duration of the connection (see the description of Figures 8 and 9 for more details).

In one embodiment of the invention, the network profile for a particular task comprises one or more of the following fields: Network type, Min Uplink BW, Min Downlink BW, Max RTT, Max PacketLoss, and/or Max Jitter.

In this embodiment, each field may be optionally specified by the client application (or the part of the client application generating the connection request, e.g., client application component 11 in Figure 1B). Any non-specified fields are given a default value, for example, in one embodiment they are supplied with the value -1. Thus in one embodiment, an application requiring to transfer 1 Mb over a min 128kb/s downlink over a WLAN network could specify a network profile as follows: "WLAN, -1,128000,-1,-1,-1,-1 with delay of 172800secs and duration of 62 secs.

A match between the required network profile NP and a connection profile record entry of the CP database 30 requires all fields in the database CP record to be better than those of the requested NP in one embodiment of the invention. Alternatively, a weighting may be given to some fields which may outweigh other fields not having the required values.

When a client application 12a wants to know its next launch time, the client library 14a of the client application 12a calls up, via an application programming interface, the client library application scheduling component 24. This process (determining the next launch time) can be implemented using any conventional programming technique apparent to those of ordinary skill in the art as appropriate for the process.

For example, where the client application 12a comprises "thisMIDlet", the call to the application scheduling library component 24 can be performed using an algorithm comprising the following pseudocode:

```
 clientLibrary.schedule(thisMIDlet, networkprofile, startdelay, duration);
 clientLibrary.schedule(networkProfile, startdelay, duration){
   // this call will find the next launch time and add the task to the scheduled task list,
   it will return null if the task
   // is created as a dependent task of another task that is already scheduled.
   launchTime = scheduler.getLaunchtime(networkprofile,startdelay,duration);
   // if scheduler returns an absolute time then client library will call OS
   to set up the future launch
   If (launchtime!=null)
      // launch at a particular time and data
      PushRegistry.registerAlarm(thisMidlet.getClassName, launchTime);
   }
   }
```

Similarly, when the "thisMIDlet" client application 12a closes it calls the client library exit function for example using an algorithm comprising the following pseudocode:

```
 clientLibrary.exit();
 clientLibrary:exit(){
   if (clientlibrary.isDependentTask==true){
      // get the dependent Midllet
      dependentMIDlet = clientlibrary.getDependentMIDlet();
      //there is an application dependent on this one completing
       launchDelay = 20; // set to fixed amount of time to allow current application to
       shutdown
       now = System.getCurrentTime();
       launchTime = now + launchDelay;
      // use standard OS function e.g. J2ME class PushRegistry.registerAlarm() to perform
      application launch at a particular time
       PushRegistry.registerAlarm(dependentMIDlet,launchTime)
   }
   }
```

Thus, when the client application 12a completes the task, prior to its exit invokes a application scheduler library component 24 finalize action as described above to check the current task record for any dependent applications (i.e., if there are one or more dependent tasks to be performed). If a dependent application exists then it will be launched after a short delay, (allowing enough time for the current client application 12a to complete exiting). It is this action that provides the guaranteed sequential invocation of applications on devices that do not support concurrent applications.

Figure 13 shows schematically the message flow when a CQMC component 26 performs active measurement of one or more connection characteristics. Here the connection measured will be the characteristics determined to exist between the communications device 10a and the a connection quality measurement server 130 over the communications link established between the communications device 10a and the network characterisation server CQMS 130 shown in Figure 11.

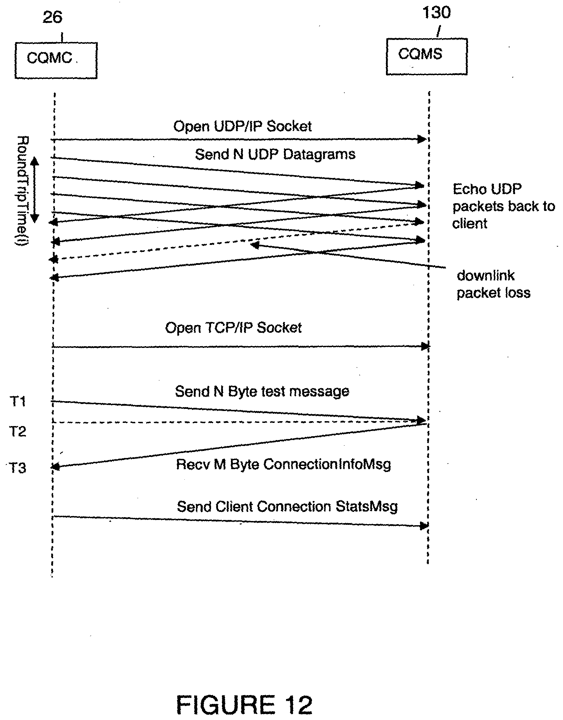

A client application 12a requests the CQMC 26 to perform a measurement of the active connection in this embodiment although in addition or alternatively the application scheduler 24 can request the CQMC 26 to perform active connection measurements. This active measurement involves connecting to the CQMS 130 and exchanging a sequence of TCP and UDP messages as shown in Figure 12. As part of the message sequence the CQMS 130 will provide additional historical data collected from other devices 10b by retrieving this information from persistent memory store 132.

Figure 12 shows schematically one embodiment of an Active Mode Connection Quality Test process performed by a CQMC 26 according to the invention which comprises a two phase connection test. Firstly, a sequence of universal datagram protocol (UDP) packets is sent to measure RoundTripTime, Packet Loss and Jitter. Secondly, a transmission control protocol (TCP) connection is established to transfer data to and from the server to determine uplink and downlink bandwidth.

As is known in the art, the RoundTripTime is calculated on the communications device 10a by measuring the average elapsed time from sending a UDP packet to receiving it back at the communications device 10a, jitter is measured as the average difference between interpacket send time and interpacket receive time, uplink bandwidth is calculated as N/(T2-T1) and downlink bandwidth as M/(T3-T1), where N is the number of bytes of the test message sent and M is the number of bytes of the connection information message. Packet loss is calculated at both the client and server using sequence numbers within the UDP packets.

The TCP send message includes the following fields:
Message size, i.e. N bytes;
a User Unique ID, for example, the Mobile Station Integrated Services Digital Network (MSISDN) unique subscriber number for a mobile telephone handset which is stored on a subscriber information module (SIM) card used to enable the user of the communications device 10a to access certain communications networks;
a Device ID, for example, the International Mobile station Equipment Identity (IMEI) of the communications device;
and a ConnectionName, for example that of the Internet Access Provider (IAP), the network operator who provides the access end of end users' connection to an Internet Service Provider, or that provided by the service set identifier (SSID) which comprises the code attached to the packets sent over a wireless communications network which identifies each packet as part of that network's traffic.

The TCP send message is padded with zero value bytes to size N, where N is set large enough to provide a reliable bandwidth measure but not so large as to incur significant user costs or delay. N can vary depending on the network connection type, for example, N is lower for GPRS networks compared to WLAN networks.

The connectionInfo message returned to the client is a structured message containing the following fields:
Message Size M;
Receive packet loss;
Network Determined ConnectionType.

In one embodiment, the CQMS 130 includes additional information in the connectionInfo message about a connection that is not currently available to the client communications device 10a. For example the public IP address of the client communications device identifier which is dependent on which ISP the client communications device 10a is connecting through can be used to identify whether the communications device 10a has roamed onto the network supported by another operator.

In one embodiment, the connection Info message includes average connection quality measures derived from the measurements provided by other communication devices 10b which have been integrated by the CQMS 130 as records held in persistent store 132. Each data record comprises aggregated values but otherwise is provided in the same format as that described hereinabove for single connection values. In addition, optionally, the number of samples contributing to each data record is represented, for example, an aggregated data record may indicate the following:
"20:00:00, 21/07/07, WLAN, 128000, 512000, 125, 30, 1" based on 20 aggregate samples.

Modifications to the above features of the invention and features having equivalent effect to the features known to those skilled in the art are implicitly included in the description, and the scope of the invention should be determined by the accompanying claims.

For example, if one or more communications devices 10a, 10b are capable of establishing a plurality of concurrent connections to two or more different access points 22a,b,c,and d, the sequencing of tasks can comprise not one task series but instead two or more task series so that the number of task series equals the number of available connections the communications device is capable of concurrently sustaining.

It will also be apparent to those ordinary skill in the art that a user of the client device can independently trigger the application to execute the tasks and/or override operation of an application seeking to execute a task at a time scheduled by the application scheduler.

### The text of the abstract repeated herein below forms part of the description:

A method of co-ordinating the time of execution of a plurality of applications 12a,b,c all hosted by the same communications device10a , each application 12a,b,c requiring a network connection for completion of a predetermined task, the method comprising for each task: determining one or more task completion conditions including one or more network conditions for said network connection required to complete said task; retrieving stored data indicating for a predetermined period of time, one or more network characteristics for an available network connection; processing said task completion conditions to determine if said one or more network characteristics retrieved for said predetermined period of time match said one or more network conditions for said network connection required to complete said task; and in the event of a match in between the network characteristics of a connection available for a predetermined period of time and the network conditions required for said network connection to complete said task, scheduling said task for execution in said predetermined period of time; and reducing the predetermined period of time by the duration of the network connection required to complete a scheduled task.

## Claims

1. A method of scheduling a data transmission over a wireless network connection in a communications network, said data transmission being required for completion of one or more predetermined tasks by an application (12a,b,c) hosted on a communications device (10a) in said communications network, the method comprising for each task:
determining one or more conditions required for said data transmission to enable said application (12) to complete said task;
determining one or more network conditions required for said wireless network connection to support said data transmission and enable said application (12) to complete said task; and
scheduling said data transmission,
**characterised by**:
predicting when said one or more network conditions in said communications network will meet the requirements imposed by the one or more conditions for said data transmission to complete said task by:
retrieving stored data indicating timing information for said one or more network conditions for an available network connection; and
processing said timing information to predict when said one or more network conditions for said network connection required to complete said task match said task completion conditions; and
scheduling said data transmission in accordance with the predicted one or more network conditions,
wherein said prediction of said one or more network conditions is automatically performed when an application (12) is configured to perform a task requiring repeated data transmission.

2. A method as claimed in claim 1, wherein said timing information comprises a duration of said network conditions above one or more threshold criteria.

3. A method as claimed in claim 2, wherein one of said threshold criterion comprises a predetermined period of time.

4. A method as claimed in any one of claims 1 to 3, wherein said stored data comprises data aggregated from a plurality of network connections established by a plurality of said communications devices (10a, 10b).

5. A method as claimed in claim 4, wherein said aggregated data is derived from data in a shared memory store (20), said data being contributed to said shared memory store (20) by a plurality of said communications devices (10a,10b) in said communications network.

6. A method as claimed in any of claims 1 to 5, wherein the shared memory store (20) is accessible by a plurality of mobile communications devices (10a, 10b) in said communications network.

7. A method as claimed in any one of claims 1 to 6, wherein the network conditions of each connection available to said mobile communications device (10a) is stored in a shared memory (20) populated using data derived from network connections established by a plurality of said communications devices (10a, 10b) in said communications network, and wherein the method further comprises the step of:
passing data from said shared memory (20) to the communications device (10a) hosting the application (12) performing the predetermined task, whereby said prediction of said one or more network conditions is performed by the mobile communications device (10).

8. A method as claimed in claim 6 or 7, wherein the method further comprises:
a network server (18) aggregating the data stored in said shared memory (20) in accordance with one or more predetermined conditions for aggregation;
passing said aggregated data to the communications device (10a) hosting the application performing the predetermined task;
processing said aggregated data on the mobile communications device (10) to automatically predict when network conditions are available for completion of said task.

9. A method as claimed in claim 6 or 7, wherein the method further comprises:
a network server (18) aggregating the data stored in said shared memory (20) in accordance with one or more predetermined conditions for aggregation;
said server (18) processing said aggregated data to predict said timing information for said one or more network conditions; and
said server (18) passing said predicted timing information to the communications device 10a hosting the application performing the predetermined task;
wherein the mobile communications device (10) determines from said passed predicted timing information when to schedule said task on an available network connection.

10. A communications device (10a) arranged to implement the method according to of any one of claims 1 to 6.

## Patentansprüche

1. Verfahren zur Zeitablaufplanung einer Datenübertragung über eine drahtlose Netzwerkverbindung in einem Kommunikations-Netzwerk, wobei die Datenübertragung zum Abschluss eines oder mehrerer Tasks durch eine Anwendung (12a, b, c) erforderlich ist, die auf einer Kommunikationsvorrichtung (10a) in dem Kommunikations-Netzwerk gehostet wird, wobei das Verfahren für jeden Task umfasst:
Ermitteln einer Bedingung oder mehrerer Bedingungen, die für die Datenübertragung erforderlich sind, um es der Anwendung (12) zu ermöglichen, den Task abzuschließen;
Ermitteln einer Netzwerk-Bedingung oder mehrerer Netzwerk-Bedingungen, die für die drahtlose Netzwerkverbindung erforderlich sind, um die Datenübertragung zu unterstützen und es der Anwendung (12) zu ermöglichen, den Task abzuschließen, und
Zeitablaufplanung der Datenübertragung,
**gekennzeichnet durch**
Vorhersagen, wann die eine Netzwerk-Bedingung oder die mehreren Netzwerk-Bedingungen in dem Kommunikations-Netzwerk die Anforderungen erfüllen, die durch die eine Bedingung oder die mehreren Bedingungen für die Datenübertragung auferlegt werden, um den Task abzuschließen durch
Wiedergewinnen von gespeicherten Daten, die Timing-Informationen für die eine Netzwerk-Bedingung oder die mehreren Netzwerk-Bedingungen für eine verfügbare Netzwerkverbindung angeben, und
Verarbeiten der Timing-Informationen, um vorauszusagen, wann die eine Netzwerk-Bedingung oder die mehreren Netzwerk-Bedingungen für die Netzwerkverbindung, die zum Abschluss des Tasks erforderlich sind, den Bedingungen zum Task-Abschluss entsprechen, und
Zeitablaufplanung der Datenübertragung gemäß der vorhergesagten einen Netzwerk-Bedingung oder mehreren Netzwerk-Bedingungen,
wobei die Vorhersage der einen Netzwerk-Bedingung oder der mehreren Netzwerk-Bedingungen automatisch durchgeführt wird, wenn eine Anwendung (12) zur Durchführung eines Tasks konfiguriert ist, der eine wiederholte Datenübertragung erfordert.

2. Verfahren wie in Anspruch 1 beansprucht, bei dem die Timing-Informationen eine Dauer der Netzwerk-Bedingungen oberhalb eines Schwellenwert-Kriteriums oder mehrerer Schwellenwert-Kriterien umfassen.

3. Verfahren wie in Anspruch 2 beansprucht, bei dem eines der Schwellenwert-Kriterien eine vorgegebene Zeitdauer umfasst.

4. Verfahren wie in einem der Ansprüche 1 bis 3 beansprucht, bei dem die gespeicherten Daten Daten umfassen, die aus einer Vielzahl von Netzwerkverbindungen aggregiert sind, die durch eine Vielzahl von Kommunikationsvorrichtungen (10a, 10b) eingerichtet wurden.

5. Verfahren wie in Anspruch 4 beansprucht, bei dem die aggregierten Daten aus Daten in einem gemeinsam genutzten Speicher (20) abgeleitet sind, wobei die Daten durch eine Vielzahl der Kommunikationsvorrichtungen (10a, 10b) in dem Kommunikations-Netzwerk zu dem gemeinsam genutzten Speicher (20) beigesteuert werden.

6. Verfahren wie in einem der Ansprüche 1 bis 5 beansprucht, bei dem eine Vielzahl von mobilen Kommunikationsvorrichtungen (10a, 10b) in dem Kommunikations-Netzwerk auf den gemeinsam genutzten Speicher (20) zugreifen können.

7. Verfahren wie in einem der Ansprüche 1 bis 6 beansprucht, bei dem die Netzwerk-Bedingungen jeder Verbindung, die für die mobile Kommunikationsvorrichtung (10a) verfügbar ist, in einem gemeinsam genutzten Speicher (20) gespeichert werden, der unter Verwendung von Daten bestückt wird, die aus Netzwerkverbindungen abgeleitet werden, die durch eine Vielzahl von Kommunikationsvorrichtungen (10a, 10b) in dem Kommunikations-Netzwerk erstellt werden, und wobei das Verfahren ferner den folgenden Schritt umfasst:
Übermitteln von Daten aus dem gemeinsam genutzten Speicher (20) an die Kommunikationsvorrichtung (10a), welche die Anwendung (12) hostet, die den vorgegebenen Task durchführt, wodurch die Vorhersage der einen Netzwerk-Bedingung oder der mehreren Netzwerk-Bedingungen durch die mobile Kommunikationsvorrichtung (10) durchgeführt wird.

8. Verfahren wie in Anspruch 6 oder 7 beansprucht, wobei das Verfahren ferner umfasst:
Aggregieren der in dem gemeinsam genutzten Speicher (20) gespeicherten Daten durch einen Netzwerk-Server (18) gemäß einer vorgegebenen Bedingung oder mehreren vorgegebenen Bedingungen für die Aggregation;
Übermitteln der aggregierten Daten an die Kommunikationsvorrichtung (10a), welche die Anwendung hostet, die den vorgegebenen Task durchführt;
Verarbeiten der aggregierten Daten auf der mobilen Kommunikationsvorrichtung (10) zur automatischen Vorhersage, wann Netzwerk-Bedingungen zum Abschließen des Tasks verfügbar sind.

9. Verfahren wie in Anspruch 6 oder 7 beansprucht, wobei das Verfahren ferner umfasst:
Aggregieren der in dem gemeinsam genutzten Speicher (20) gespeicherten Daten durch einen Netzwerk-Server (18) gemäß einer vorgegebenen Bedingung oder mehreren vorgegebenen Bedingungen für die Aggregation;
Verarbeiten der aggregierten Daten durch den Server (18) zur Vorhersage der Timing-Informationen für die eine Netzwerk-Bedingung oder die mehreren Netzwerk-Bedingungen und
Übermitteln der vorhergesagten Timing-Informationen durch den Server (18) an die Kommunikationsvorrichtung (10a), welche die Anwendung hostet, die den vorgegebenen Task durchführt,
wobei die mobile Kommunikationsvorrichtung (10) aus den übermittelten vorhergesagten Timing-Informationen ermittelt, wann der Task auf einer verfügbaren Netzwerkverbindung zeitlich einzuplanen ist.

10. Kommunikationsvorrichtung (10a), die dazu ausgebildet ist, das Verfahren nach einem der Ansprüche 1 bis 6 zu implementieren.

## Revendications

1. Procédé d'ordonnancement d'une transmission de données sur une connexion de réseau sans fil dans un réseau de communications, ladite transmission de données étant requise pour mener à bien une ou plusieurs tâche(s) prédéterminée(s) par une application (12a,b,c) hébergée sur un dispositif (10a) de communications dans ledit réseau de communications, le procédé comprenant pour chaque tâche :
la détermination d'une ou plusieurs condition(s) requise(s) pour ladite transmission de données pour permettre à ladite application (12) de mener à bien ladite tâche ;
la détermination d'une ou plusieurs condition(s) de réseau requise(s) pour ladite connexion de réseau sans fil pour supporter ladite transmission de données et permettre à ladite application (12) de mener à bien ladite tâche ; et
l'ordonnancement de ladite transmission de données,
**caractérisé par** :
la prédiction de quand ladite/lesdites une ou plusieurs condition(s) de réseau dans ledit réseau de communications satisfera/satisferont aux exigences imposées par la ou les condition(s) pour ladite transmission de données pour mener à bien ladite tâche en :
récupérant des données stockées indiquant des informations de synchronisation pour ladite/lesdites une ou plusieurs condition(s) de réseau pour une connexion de réseau disponible ; et
traitant lesdites informations de synchronisation pour prédire quand ladite/lesdites une ou plusieurs condition(s) de réseau pour ladite connexion de réseau requise(s) pour mener à bien ladite tâche correspond(ent) auxdites conditions pour mener à bien la tâche ; et
l'ordonnancement de ladite transmission de données conformément à la/aux condition(s) de réseau prédite(s),
dans lequel ladite prédiction de ladite/desdites une ou plusieurs condition(s) de réseau est exécutée automatiquement lorsqu'une application (12) est configurée pour exécuter une tâche requérant une transmission de données répétée.

2. Procédé selon la revendication 1, dans lequel lesdites informations de synchronisation comprennent une durée desdites conditions de réseau au-delà d'un ou plusieurs critère(s) de seuil.

3. Procédé selon la revendication 2, dans lequel un desdits critères de seuil comprend une période de temps prédéterminée.

4. Procédé selon l'une quelconque des revendications 1 à 3, dans lequel lesdites données stockées comprennent des données agrégées à partir d'une pluralité de connexions de réseau établies par une pluralité desdits dispositifs (10a, 10b) de communications.

5. Procédé selon la revendication 4, dans lequel lesdites données agrégées sont dérivées de données dans un stockage (20) de mémoire partagée, lesdites données étant apportées audit stockage (20) de mémoire partagée par une pluralité desdits dispositifs (10a, 10b) de communications dans ledit réseau de communications.

6. Procédé selon l'une quelconque des revendications 1 à 5, dans lequel le stockage (20) de mémoire partagée est accessible par une pluralité de dispositifs (10a, 10b) de communications mobiles dans ledit réseau de communications.

7. Procédé selon l'une quelconque des revendications 1 à 6, dans lequel les conditions de réseau de chaque connexion disponible pour ledit dispositif (10a) de communications mobile sont stockées dans une mémoire partagée (20) peuplée en utilisant des données dérivées de connexions de réseau établies par une pluralité desdits dispositifs (10a, 10b) de communications dans ledit réseau de communications, et dans lequel le procédé comprend en outre l'étape de :
passage de données de ladite mémoire partagée (20) au dispositif (10a) de communications hébergeant l'application (12) exécutant la tâche prédéterminée, d'où il résulte que ladite prédiction de ladite/desdites une ou plusieurs condition(s) de réseau est exécutée par le dispositif (10) de communications mobile.

8. Procédé selon la revendication 6 ou 7, dans lequel le procédé comprend en outre :
un serveur (18) de réseau agrégeant les données stockées dans ladite mémoire partagée (20) conformément à une ou plusieurs condition(s) prédéterminée(s) pour l'agrégation ;
le passage desdites données agrégées au dispositif (10a) de communications hébergeant l'application exécutant la tâche prédéterminée ;
le traitement desdites données agrégées sur le dispositif (10) de communications mobile pour prédire automatiquement quand des conditions de réseau sont disponibles pour mener à bien ladite tâche.

9. Procédé selon la revendication 6 ou 7, dans lequel le procédé comprend en outre :
un serveur (18) de réseau agrégeant les données stockées dans ladite mémoire partagée (20) conformément à une ou plusieurs condition(s) prédéterminée(s) pour l'agrégation ;
ledit serveur (18) traitant lesdites données agrégées pour prédire lesdites informations de synchronisation pour ladite/lesdites une ou plusieurs condition(s) de réseau ; et
ledit serveur (18) passant lesdites informations de synchronisation prédites au dispositif (10a) de communications hébergeant l'application exécutant la tâche prédéterminée ;
dans lequel le dispositif (10) de communications mobile détermine à partir desdites informations de synchronisation prédites passées quand ordonnancer ladite tâche sur une connexion de réseau disponible.

10. Dispositif (10a) de communications agencé pour mettre en oeuvre le procédé selon l'une quelconque des revendications 1 à 6.
